# EUROPÄISCHE PATENTANMELDUNG

(11) **EP 1 104 716 A2**
(43) Veröffentlichungstag der Anmeldung: **06.06.2001**
(21) Anmeldenummer: 00125208.9
(22) Anmeldetag: 22.11.2000
(51) Int. Cl.: B60K 37/02

(54) **Kombi-Instrument für Kraftfahrzeug**

(30) Priorität: 01.12.1999 DE 19957867
(71) Anmelder: Volkswagen Aktiengesellschaft, 38436 Wolfsburg (DE)
(72) Erfinder: Klebba, Marc, 38104 Braunschweig (DE); Hofmann, Robert, 10777 Berlin (DE); Hofmann, Gustav, 38114 Braunschweig (DE)

(57) **Zusammenfassung**

Die Erfindung betrifft ein Kombi-Instrument für Kraftfahrzeuge mit mehreren Anzeigeinstrumenten, welche zur Anzeige jeweils einzelne Zifferblätter oder Anzeigeareale aufweisen, gemäß Oberbegriff des Patentanspruches 1. Um hierbei zu erreichen, dass trotz hoher Integration von Einzelinstrumenten eine gute und sichere Ablesbarkeit gewährleistet ist und dennoch die Fahrerablenkung trotz höherer Instrumentendichte deutlich reduziert ist, ist erfindungsgemäß vorgeschlagen, dass das Anzeigeareal der Hauptinstrumente (2, 3) mindestens ein weiteres Zifferblatt bzw. Anzeigeareal eines weiteren Instrumentes (10, 11, 12) enthält, welches in einer zweiten Ebene anderer Tiefe angeordnet ist bzw. visuell generiert wird.

## Beschreibung

Die Erfindung betrifft ein Kombi-Instrument für Kraftfahrzeuge mit mehreren Anzeigeinstrumenten, welche zur Anzeige jeweils einzelne Zifferblätter oder Anzeigeareale aufweisen, gemäß Oberbegriff des Patentanspruches 1.

Die gute und günstige Ablesbarkeit der Anzeigenistrumentierung im Kraftfahrzeug spielt für einen sicheren Fahrbetrieb eine erhebliche Rolle. Für den Fahrbetrieb moderner Fahrzeuge bedarf es jedoch einer Reihe von Instrumenten, die über den reinen Betrieb von Tachometer und Drehzahlmesser hinausgehen. Eine entsprechende geeignete Plazierung um dieselben gut einsehen zu können, ohne dabei übermässig von dem aktuellen Verkehrsgeschehen abgelenkt zu werden, ist daher wichtig.

Weitergehend wird im Hinblick auf Fertigungsvorteile versucht, die wesentliche Instrumentierung in das sog. Kombi-Instrument zu integrieren. Ein fortwährendes Dilemma ist dabei natürlich die Instrumentendichte auf kleinem Raum. Diese kann wiederum zu hoher Ablenkung führen.

Die Gestaltung eines Kombi-Instrumentes ist beispielsweise der DE 196 42 834 C1 bekannt. Im Hinblick auf eine gute Einsehbarkeit auch bei unterschiedlichen Lichtverhältnissen, muß die Instrumentierung auch entsprechend diesem Aspekt folgend plaziert sein. Darüber hinaus gibt es Blenden oder überstehende Blendenelemente, die die Einsichtnahme des Kombi-Instrumentes bei vielerlei Lichtverhältnissen ermöglichen. Aus dem o. g. Stand der Technik ist daher ein Kombi-Instrument mit einer dem Anzeigefeld vorgeschalteten Blende bekannt, deren Vorderfläche einem vorgegebenen Verlauf einer Instrumententafel folgt. Die Blende bildet dabei ein eigenständiges, am Kombi-Instrument lösbar befestigtes Bauteil, dessen der Vorderfläche des Kombi-Instrumentes zugewandte Rückseite parallel zu dieser Vorderfläche des Kombi-Instrumentes verläuft und dessen dem Kombi-Instrument abgewandte Vorderfläche einen solchen Verlauf aufweist, der dem Verlauf der Instrumententafel im jeweiligen Bereich des Fahrzeugführersitzes folgt. Für ein linksgesteuertes Fahrzeug kommt daher eine dem dortigen Verlauf der Instrumententafel mit ihrer an die Vorderfläche angepaßte Blende zum Einsatz, während bei einem rechtsgesteuerten Fahrzeug eine andere Blende zum Einsatz kommt, deren Vorderfläche dem Verlauf der Instrumententafel im Bereich des rechten Fahrzeugführersitzes folgt.

Hieraus geht hervor, dass die Blende eine wesentliche Rolle für die gute Einsichtnahme der Instrumentierung spielt, und darüber hinaus eine Blendung durch ungünstige Lichtverhältnisse vermieden wird. Um dies sowohl für Rechtslenkerfahrzeuge, als auch für Linkslenkerfahrzeuge ohne erheblichen zusätzlichen Aufwand umbauen zu können bzw. ein und dasselbe Kombi-Instrument verwenden zu können, ist eine abnehmbare, separat montierte Blende eingesetzt.

Ein Kombi-Instrument dieser Art berücksichtigt lediglich die Notwendigkeit einer solchen Blende zur Vermeidung von Streulichtblendung. Darüber hinaus begünstigt eine solche Blende nicht die Einsichtnahme eines Kombi-Instrumentes im Hinblick auf eine hohe Instrumentendichte.

Der Erfindung liegt somit die Aufgabe zugrunde, ein Kombi-Instrument für Kraftfahrzeuge der gattungsgemäßen Art dahingehend weiterzubilden, dass trotz hoher Integration von Einzelinstrumenten eine gute und sichere Ablesbarkeit gewährleistet wird, die selbst bei hoher Einzelinstrumentendichte keine Erhöhung der Fahrerablenkung bewirkt.

Die gestellte Aufgabe ist bei einem Kombi-Instrument der gattungsgemäßen Art erfindungsgemäß durch die kennzeichnenden Merkmale des Patentanspruches 1 gelöst.

Weitere vorteilhafte Ausgestaltungen des erfindungsgemäßen Kombi-Instrumentes sind in den übrigen Ansprüchen angegeben. Das Wesen der Erfindung besteht dabei darin, dass jede Anzeige ein einzelnes Zifferblatt aufweist oder ein Anzeigeareal, wobei mindestens ein weiteres Zifferblatt bzw. Anzeigeareal in einer zweiten Ebene anderer Tiefe erscheint bzw. in entsprechender Weise visuell generiert wird.

Auf diese Weise können mehrere Instrumente in den dichten Bauraum untergebracht werden. Um keine verwirrende höhere Integrationsdichte von Einzelinstrumenten zu schaffen, wird gegenüber dem eigentlichen Anzeigeareal und dem Zifferblatt ein weiteres Zifferblatt oder Anzeigenareal in einer zweiten Ebene einer anderen Tiefe generiert bzw. platziert. Am Beispiel heißt dies, dass beispielsweise neben Anzeigen- oder Zifferblattbereich des Tachometers ein zweites Anzeigenareal oder Zifferblatt kleineren geometrischen Ausmaßes angeordnet wird, welches in einer zweiten Ebene sich somit deutlich von der ursprünglichen Tachometerebene abhebt. Trotz Erhöhung der Instrumentendichte, gemessen am Einbauraum oder an der Einbaufläche oder an der optischen Einsichtnahmefläche des Kombi-Instrumentes, wird das integrierte zusätzliche Instrument optisch hervorgehoben in eine zweite Ebene, wodurch es vom übrigen deutlich unterscheidbar ist. Auch muß das Auge bei Einsichtnahme während der Fahrt dieses Instrument nicht suchen, da es im buchstäblichen Sinne hervorstechend ist.

In weiterer vorteilhafter Ausgestaltung ist angegeben, dass das Kombi-Instrument mit analoger Instrumentierung ausgestattet ist und die Zifferblätter in zweiter Ebene räumlich hervorgehoben sind.

In weiterer vorteilhafter Ausgestaltung ist angegeben, dass die Instrumente bzw. Anzeigen in tiefen Schächten bezüglich der Kombi-Instrumentenoberfläche angeordnet sind. Hierdurch wird eine entsprechende bauliche Voraussetzung dafür gegeben, eine Mehrzahl von Instrumenten in unterschiedlichen Ebenen zueinander und benachbart anzuordnen. In einem weiteren Beispiel enthält der Bauraum des ansonsten vorgesehenen Tachometers integral noch beispielsweise die Anzeige des Kilometerstandes oder weiterer Fahrdaten auf einem gesonderten Display. Es wird keine zusätzliche Darstellungsfläche über die optische Darstellungsfläche des Kombi-Instrumentes hinaus benötigt, lediglich die Integrationsdichte auf der Instrumentierung wird erhöht, ohne jedoch das Auge fehlzuleiten oder den Blick des Fahrers irrezuführen.

In weiterer vorteilhafter Ausgestaltung ist angegeben, dass sowohl die Hauptinstrumentierung, als auch die weitere und die integrale Instrumentierung analog sind. Dies kann am Beispiel bedeuten, dass eine Uhr integral im Anzeigefeld des Drehzahlmessers plaziert ist, jedoch in einer anderen, hervorgehobenen Ebene, so dass eine deutliche Unterscheidung ohne ein langes Suchen mit dem Blick des Fahrers möglich ist.

Eine weitere Möglichkeit besteht auch darin, dass die eigentliche Hauptinstrumentierung sowie auch die weitere Instrumentierung digital sind. Dies kann dadurch erreicht werden, dass entweder zwei in räumlich unterschiedlichen Ebenen angeordnete Displaysegmente plaziert werden, oder möglicherweise die unterschiedliche Tiefenanordnung und Tiefenwirkung durch eine entsprechende Generierung auf dem Display erfolgt. Das Display wird in dieser Weise dann dreidimensional darstellend arbeiten. In diesem Falle wird die zweite Anzeigen- oder Instrumentenebene zwar nur vorgetäuscht, jedoch wird optisch für das Auge der gleiche Zweck erreicht und trotz höherer Integration eine gute, hervorgehobene Erkennung der einzelnen Instrumente gewährleistet.

In weiterer vorteilhafter Ausgestaltung ist angegeben, dass die Hauptinstrumentierung analog sein kann und die zusätzliche Instrumentierung in zweiter Ebene digital, beispielsweise in einem anderen Schacht, oder durch ein elektronisches Zusatzdisplay, integriert im analogen Instrument.

Eine weitere Ausgestaltungsmöglichkeit besteht dann natürlich konsequenterweise darin, dass die Hauptinstrumentierung digital ausgelegt ist und das zusätzliche Instrument in zweiter Ebene analog.

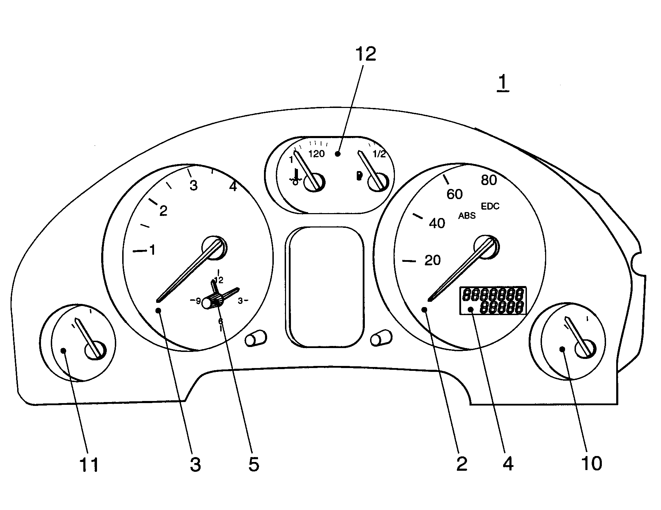

Die Erfindung ist in der Zeichnung dargestellt und nachfolgend näher beschrieben.

Die Zeichnung stellt ein Kombi-Instrument 1 als solches dar. Hierbei sind in klassischer Bauweise als Großinstrumente zum einen der Tachometer 2 und zum anderen der Drehzahlmesser 3 nebeneinander angeordnet plaziert. Die Hauptinstrumente befinden sich in tiefgelegten Schächten, wodurch eine äußere Blende möglicherweise noch aus gestalterischen Gründen angebracht wird, aus funktioneller Sicht jedoch nicht mehr notwendig ist, weil die Tiefschachtinstrumentierung bereits Blendungen beseitigt bzw. präventiv verhindert.

Bei der vorliegenden Erfindung haben die tiefen Schächte, in denen die einzelnen Hauptinstrumente 2, 3 plaziert sind, jedoch eine weitergehende technische Wirkung. Durch die entsprechende physische Plazierung in einem tiefen Schacht entstehen naturgemäß weitere mögliche Ebenen, die sich von der Ebene der Hauptinstrumente abheben können. Insofern entsteht hier für die Tiefschachtanordnung eine Doppelfunktion, die über den rein gestalterischen Zweck oder die Verhinderung einer Blendung hinausgeht. So ist erkennbar, dass der rechts dargestellte Tachometer 2 noch ein kleineres Displayelement 4 integral enthält, welches ebenfalls optisch hervorgehoben ist, und numerische oder alphanumerische Anzeigemöglichkeiten beinhaltet. Die weiteren Instrumente 10, 11, 12 sind neben bzw. um die Hauptinstrumentierung angeordnet. Die Schächte, in denen die besagten weiteren Instrumente 10, 11, 12 untergebracht sind, sind nicht so tief, wie die Schächte der Hauptinstrumente. Dadurch heben sie sich im buchstäblichen Sinne optisch ab.

Durch die rein optische Hervorhebung in die zweite, höher gelegene Ebene können diese Anzeigensegmente trotz integrierter Bauweise vom Tachometer deutlicher unterschieden werden. Durch die deutlichere optische Abgrenzung kann der Fahrzeugführer dieses Teilinstrument auch wesentlich schneller erfassen und gedanklich auswerten. Dies führt wiederum zu einer Reduktion der dafür gebührlichen Aufmerksamkeit, die dem Fahrgeschehen ansonsten fehlen würde.

In einem linken tiefen Schacht ist in diesem Ausführungsbeispiel ein Drehzahlmesser 3 angeordnet. Hierbei ist ebenfalls ein weiteres Instrument 5 integriert, nämlich die Uhr. Die dort erkennbare Uhr kann ebenfalls in einer zweiten, ebenso höher gelegenen Ebene, wie im vorgenannten Beispiel platziert sein, und hebt sich somit optisch deutlich ab. Trotz selber flächenmäßiger Integration wird die Instrumentendichte zwar erhöht, jedoch durch die optische Hervorhebung sind die Instrumente voneinander sehr gut unterscheidbar.

Das besagte Beispiel für die Plazierung der Uhr im Drehzahlmesserschacht ist ein Beispiel dafür, dass zwei analoge Instrumente gemäß der Erfindung durch bauliche Plazierung in unterschiedlichen Einbautiefen gemäß der Erfindung unterscheidbar sind, selbst wenn sie im selben Schacht platziert sind. Das Tachometerbeispiel ist ein Beispiel dafür, dass auch analoge und digitale Instrumentierung auch im Sinne der Erfindung miteinander kombiniert werden können. In beiden Fällen entsteht der gleiche Vorteil gemäß der angegebenen Erfindung.

## Patentansprüche

1. Kombi-Instrument für Kraftfahrzeuge mit mehreren Anzeigeinstrumenten, welche zur Anzeige jeweils einzelne Zifferblätter oder Anzeigeareale aufweisen,
**dadurch gekennzeichnet**,
dass das Anzeigenareal der Hauptinstrumente (2, 3) mindestens ein weiteres Zifferblatt bzw. Anzeigenareal eines weiteren Instrumentes (10, 11, 12) integral enthält, welches in einer zweiten Ebene anderer Tiefe angeordnet ist bzw. visuell generiert wird.

2. Kombi-Instrument nach Anspruch 1,
**dadurch gekennzeichnet**,
dass das Kombi-Instrument (1) mit analoger Instrumentierung ausgestattet ist und die Zifferblätter der weiteren Instrumente (10, 11, 12) in der zweiten Ebene räumlich hervorgehoben sind.

3. Kombi-Instrument nach Anspruch 2,
**dadurch gekennzeichnet**,
dass die Instrumente/Anzeigen in tiefen Schächten bezüglich der Kombi-lnstrumentenoberfläche angeordnet sind.

4. Kombi-Instrument nach einem der vorhergehenden Ansprüche,
**dadurch gekennzeichnet**,
dass sowohl die Hauptinstrumentierung (2, 3) als auch die weitere Instrumentierung (10, 11, 12) analog ausgeführt sind.

5. Kombi-Instrument nach einem der vorhergehenden Ansprüche,
**dadurch gekennzeichnet**,
dass sowohl die Hauptinstrumentierung (2, 3) als auch die weitere Instrumentierung (10, 11, 12) digital ausgebildet sind.

6. Kombi-Instrument nach einem der vorhergehenden Ansprüche,
**dadurch gekennzeichnet**,
dass die Hauptinstrumentierung (2, 3) analog ausgeführt ist und die weitere Instrumentierung (10, 11, 12) digital ausgeführt ist.

7. Kombi-Instrument nach einem der vorhergehenden Ansprüche,
**dadurch gekennzeichnet**,
dass die Hauptinstrumentierung (2, 3) digital ausgeführt ist und die weitere Instrumentierung (10, 11, 12) analog ausgeführt ist.
